# EUROPÄISCHE PATENTSCHRIFT

(11) **EP 2 351 320 B1**
(45) Veröffentlichungstag und Bekanntmachung des Hinweises auf die Patenterteilung: **19.10.2016**
(21) Anmeldenummer: 09744980.5
(22) Anmeldetag: 09.09.2009
(51) Int. Cl.: H04L 29/06, G06F 21/62, G06F 21/64, G06F 21/40, G06F 21/51

(54) **SERVERSYSTEM UND VERFAHREN ZUR BEREITSTELLUNG MINDESTENS EINER LEISTUNG**
SERVER SYSTEM AND METHOD PROVIDING AT LEAST A MERIT
SYSTEME SERVEUR ET PROCEDE DE FOURNITURE D'AU MOINS UN SERVICE

(30) Priorität: 09.09.2008 DE 102008046639
(43) Veröffentlichungstag der Anmeldung: 03.08.2011
(73) Patentinhaber: Spalka, Adrian, 56076 Koblenz (DE)
(72) Erfinder: LEHNHARDT, Jan, 53127 Bonn (DE); RIENHARDT, Florian, 53113 Bonn (DE)
(74) Vertreter: Maikowski & Ninnemann Patentanwälte Partnerschaft mbB
(86) Internationale Anmeldenummer: PCT/EP2009/061701
(87) Internationale Veröffentlichungsnummer: WO 2010/029111

(56) Entgegenhaltungen:
- EP-A1- 1 927 930
- US-A1- 2006 059 539
- US-A1- 2006 173 781
- US-A1- 2008 120 302
- WEI ZHOU ET AL: "Implement role based access control with attribute certificates" ADVANCED COMMUNICATION TECHNOLOGY, 2004. THE 6TH INTERNATIONAL CONFERE NCE ON PHOENIX PARK, KOREA FEB. 9-11, 2004, PISCATAWAY, NJ, USA,IEEE, Bd. 1, 9. Februar 2004 (2004-02-09), Seiten 536-540, XP010702194 ISBN: 978-89-5519-119-6
- TOMUR E ET AL: "Application of temporal and spatial role based access control in 802.11 wireless networks" COMPUTERS & SECURITY, ELSEVIER SCIENCE PUBLISHERS. AMSTERDAM, NL, Bd. 25, Nr. 6, 1. September 2006 (2006-09-01), Seiten 452-458, XP025034331 ISSN: 0167-4048 [gefunden am 2006-09-01]

## Beschreibung

Die Erfindung betrifft ein Serversystem zur Bereitstellung mindestens einer Leistung nach dem Oberbegriff des Anspruchs 1, ein Verfahren zum Bereitstellen einer Leistung über ein Serversystem nach dem Oberbegriff des Anspruchs 2 sowie ein Verfahren zum Ausführen eines Anwendungsprogramms auf einem Anwenderrechner.

Ein derartiges Serversystem zur Bereitstellung mindestens einer Leistung weist eine Schnittstelle zur Verbindung eines Servers mit einem Anwenderrechner und ein Authentisierungsmittel auf, das ausgebildet und vorgesehen ist, persönliche Kenndaten eines Nutzers, der sich über den Anwenderrechner mit dem Server verbindet, abzufragen und dem Anwenderrechner bei erfolgreicher Authentisierung einen Zugang zu erlauben.

Unter einem Server ist vorliegend ein Rechner oder ein Rechnersystem zu verstehen, das Leistungen in Form von Diensten oder Daten anbietet und auf das von unterschiedlichen Anwenderrechnern, so genannten Clients, zugegriffen werden kann. Der Server ist hierbei an einer zentralen Stelle in einem Kommunikationsnetzwerk, beispielsweise dem Internet, aufgestellt, über das eine Vielzahl von Rechnern und Rechnersystemen zum Austausch von Daten miteinander vernetzt sind. Ein Nutzer kann sich über einen Anwenderrechner mit dem Server verbinden und so auf den Server zugreifen.

Um zu verhindern, dass nichtberechtigte Nutzer auf einen Server zugreifen, verwenden herkömmliche Server eine Authentisierung, bei der persönliche Kenndaten eines Nutzers, beispielsweise ein vorab festgelegter Nutzername und ein Passwort, abgefragt werden. Der Server fordert dabei den Nutzer zur Eingabe seines Nutzernamens und seines Passworts auf und gewährt dem Nutzer einen Zugang zu den Leistungen des Servers erst, wenn Nutzername und Passwort geprüft worden sind. Diese Authentisierung wird auch als schwache Authentisierung bezeichnet.

Die US 2008/0120302 A1 betrifft ein Verfahren, bei dem ein Nutzer zunächst authentisiert wird und ihm, wenn die Authentisierung erfolgreich gewesen ist, in Abhängigkeit von seiner Autorisierung Zugang zu der Leistung gewährt, zu der er berechtigt ist.

Aus der US 2006/0059539 A1 ist ein Verfahren zur Authentisierung bekannt, bei dem bestimmte Passwort-Vorschriften verwendet werden. Die Passwort-Vorschriften sollen dabei zum Beispiel dazu dienen, einen Nutzer von der Wahl eines zu einfachen Passworts abzuhalten. Bei sogenannten Kerberos-Vorschriften werden andere Vorschriften eingesetzt, wobei diese dazu dienen, ein Berechtigungsticket (Kerberos-Ticket) sicherer zu machen.

Die US 2006/0173781 A1 beschreibt eine Authentisierung, die von einem Authentisierungsservice durchgeführt wird und z.B. ein Passwort abfragt.

Der Artikel Wei Zhou et al., "Implement role based access control with attribute certificates", Advanced Communication Technology, 2004 beschreibt eine Authentisierung und eine Autorisierung in einem Gesamtsystem. Hierbei loggt sich ein Nutzer zunächst auf einem Server mit einem privaten Schlüssel ein, aus dem ein sogenannter "LDAP distinguished name (DN)" erzeugt wird. Anhand dieses DN wird bestimmt, zu welchen Leistungen der Nutzer autorisiert ist, und entsprechend werden dem Nutzer die autorisierten Leistungen zur Verfügung gestellt.

Aufgabe der vorliegenden Erfindung ist es, ein Serversystem und ein Verfahren zum Bereitstellen einer Leistung sowie ein Verfahren zum Ausführen eines Anwendungsprogramms zur Verfügung zu stellen, mit denen eine erhöhte Sicherheit im Betrieb des Serversystems erreicht und ein Zugriff auf Leistungen durch einen nichtberechtigten Nutzer mit erhöhter Zuverlässigkeit vermieden werden kann.

Diese Aufgabe wird durch ein Serversystem mit den Merkmalen des Anspruchs 1 gelöst.

Bei einem Serversystem der eingangs genannten Art ist ein Serverschutzsystem vorgesehen, das ausgebildet und vorgesehen ist, nach erfolgreicher Authentisierung durch das Authentisierungsmittel zusätzliche Anwenderrechner-spezifische Kenndaten mit vorab auf dem Server gespeicherten Kenndaten zu vergleichen und dem Anwenderrechner die Berechtigung zum Verfügen über die mindestens eine Leistung in Abhängigkeit von dem Vergleich der Anwenderrechner-spezifischen Kenndaten zu erteilen.

Die Aufgabe wird zudem durch ein Verfahren zum Bereitstellen einer Leistung über ein Serversystem gelöst, bei dem sich ein Nutzer über einen Anwenderrechner mit einem Server verbindet, um Zugang zu einer vom Server angebotenen Leistung zu erhalten, der Server zur Authentisierung persönliche Kenndaten des Nutzers abfragt und der Server dem Anwenderrechner bei erfolgreicher Authentisierung einen Zugang erlaubt. Hierbei ist vorgesehen, dass nach erfolgreicher Authentisierung zusätzliche Anwenderrechner-spezifische Kenndaten mit vorab auf dem Server gespeicherten Kenndaten verglichen werden und dem Anwenderrechner die Berechtigung zum Verfügen über die mindestens eine Leistung in Abhängigkeit von dem Vergleich der Anwenderrechner-spezifischen Kenndaten erteilt wird.

Die vorliegende Erfindung geht von dem Grundgedanken aus, neben der Überprüfung von persönlichen Kenndaten zur Authentisierung eines Nutzers zusätzliche Anwenderrechner-spezifische Kenndaten abzufragen und den Zugang zu einer Leistung des Servers in Abhängigkeit von der Überprüfung der zusätzlichen Anwenderrechner-spezifischen Kenndaten zu gewähren. Bei den persönlichen Kenndaten des Nutzers kann es sich hierbei um einen Nutzernamen und ein Passwort handeln, während die zusätzlichen Anwenderrechner-spezifischen Kenndaten beispielsweise weitere persönliche Angaben des Nutzers, eine Netzwerkadresse des Anwenderrechners, eine Kennung eines vorbestimmten Anwendungsprogramms des Anwenderrechners und/oder ein vorbestimmtes Zeitfenster sein können. Die persönlichen Kenndaten des Nutzers stammen dabei vom Nutzer selbst, während die zusätzlichen Anwenderrechnerspezifischen Kenndaten entweder vom Nutzer selbst oder unmittelbar vom Anwenderrechner stammen können.

Handelt es sich bei den Anwenderrechner-spezifischen Kenndaten um zusätzliche persönliche Angaben des Nutzers, so fordert das Serverschutzsystem den Nutzer zur Eingabe der zusätzlichen persönlichen Angaben - beispielsweise seines Geburtsdatums, seines Wohnorts oder dergleichen - auf, und der Nutzer übermittelt die Anwenderrechner-spezifischen Kenndaten über den Anwenderrechner an den Server.

Handelt es sich bei den zusätzlichen Anwenderrechner-spezifischen Kenndaten hingegen um die Netzwerkadresse des Anwenderrechners, so erhält der Server diese in Form der so genannten Mac- oder IP-Adresse unmittelbar vom Anwenderrechner in automatischer Weise bei Herstellung der Verbindung mit dem Server (aus dem so genannten "handshake" des Verbindungsprotokolls).

Handelt es sich bei den zusätzlichen Anwenderrechner-spezifischen Kenndaten um die Kennung eines Anwendungsprogramms, so wird diese beispielsweise in Form des Namens des Anwendungsprogramms oder eines Namens und Passworts des Anwendungsprogramms unmittelbar vom Anwendungsprogramm an den Server übermittelt.

Handelt es sich bei den zusätzlichen Anwenderrechner-spezifischen Kenndaten um eine vorgeschriebene Einhaltung eines vorbestimmtes Zeitfenster, so wird dem Nutzer ein Zugriff nur innerhalb eines bestimmten Zeitfensters ermöglicht, wobei der Server die Einhaltung des Zeitfensters anhand seiner internen Uhrzeit überprüft.

Die zusätzlichen Anwenderrechner-spezifischen Kenndaten können individuell einem Nutzer oder einer Nutzergruppe zugeordnet werden.

Der Zugriff auf eine Leistung durch einen Nutzer wird somit erst gewährt, wenn nach einer Authentisierung mittels persönlicher Kenndaten des Nutzers in einem weiteren Schritt zusätzliche Anwenderrechner-spezifische Kenndaten überprüft worden sind. Der Vorgang bis zur Bereitstellung der Berechtigung zum Zugriff auf die Leistung ist somit zweigeteilt. In einem ersten Schritt erfolgt eine so genannte schwache Authentisierung, bei der lediglich persönliche Kenndaten, beispielsweise ein Nutzernamen und ein Passwort, eines Nutzers abgefragt werden. Ist diese erste Authentisierung erfolgreich, so werden in einem zweiten Schritt zusätzliche Anwenderrechner-spezifische Kenndaten geprüft. Beispielsweise wird geprüft, ob die Netzwerkadresse (Mac-Adresse oder IP-Adresse) des Anwenderrechners, über den der Nutzer auf den Server zuzugreifen versucht, mit einer vorab auf dem Server gespeicherten Netzwerkadresse übereinstimmt. Ist dies der Fall, wird dem Nutzer die Berechtigung zum Verfügen über die gewünschte Leistung erteilt. Mit anderen Worten wird in diesem Fall einem Nutzer der Zugriff auf den Server nur von einem vorbestimmten Anwenderrechner mit einer bestimmten Netzwerkadresse gewährt. In analoger Weise können als zusätzliche Anwenderrechner-spezifische Kenndaten weitere persönliche Angaben des Nutzers, eine Kennung des Anwendungsprogramms oder ein Zeitfenster abgefragt werden, um dem Nutzer beispielsweise einen Zugriff nur über ein bestimmtes Anwendungsprogramm oder nur innerhalb eines bestimmten Zeitfensters zu erlauben.

Die Berechtigung zum Verfügen über die mindestens eine Leistung wird dem Nutzer in Abhängigkeit von der Überprüfung der Anwenderrechner-spezifischen Kenndaten erteilt. In Abhängigkeit von dem Ergebnis der Überprüfung können dabei unterschiedliche Maßnahmen ergriffen werden.

Beispielsweise ist denkbar, nur bei erfolgreicher Überprüfung, also bei einer Übereinstimmung der zusätzlichen Anwenderrechner-spezifischen Kenndaten mit den vorab auf dem Server gespeicherten Kenndaten, dem Nutzer einen Zugriff auf die Leistung zu erlauben.

Alternativ ist denkbar, einen Zugang zu gewähren, dem Nutzer aber eine andere (falsche) Leistung zur Verfügung zu stellen. Dieses wird auch als "Honey pot" bezeichnet.

In einer dritten Variante ist denkbar, trotz fehlgeschlagener Überprüfung der zusätzlichen Anwenderrechner-spezifischen Kenndaten einen Zugang zu gewähren und die richtige Leistung zur Verfügung zu stellen, den Nutzer aber unter besondere Beobachtung zu stellen.

In einer vierten Variante ist denkbar, dass der Zugang bei erfolgloser Authentisierung noch nicht gewährt wird, sondern stattdessen weitere Anwenderrechner-spezifische Kenndaten für eine zusätzliche Authentisierung abgefragt werden. Erst wenn dieser zusätzliche Authentisierungsschritt auch fehlschlägt, wird der Zugang endgültig verwehrt.

Zusätzlich zu den genannten Maßnahmen kann der Server weitere Maßnahmen ergreifen, beispielsweise einen Systemadministrator oder andere vorbestimmte Stellen darüber benachrichtigen, dass ein nicht korrekt authentisierter Nutzer auf den Server zuzugreifen versucht.

Der Server kann beispielsweise als Datenbankserver ausgebildet sein, der vorbestimmte Daten bereitstellt. Grundsätzlich kann das hier vorgestellte Serverschutzsystem jedoch bei allen Serversystemen eingesetzt werden, die Leistungen anbieten und auf die über ein Datennetzwerk von Anwenderrechnern (Clients) zugegriffen werden kann.

Die Berechtigung zum Verfügen über die mindestens eine Leistung wird nach Unterbrechung der Verbindung des Servers mit dem Anwenderrechner gelöscht. Der Gedanke hierbei ist, dass eine bereitgestellte Verbindung nach ihrer Beendigung rückstandslos abgebaut wird, bei einer erneuten Verbindung also erneut eine vollständige Authentisierung mit Abfrage der persönlichen Kenndaten des Nutzers in einem ersten Schritt und Abfrage bzw. Überprüfungen der zusätzlichen Anwenderrechner-spezifischen Kenndaten in einem zweiten Schritt erfolgt.

Vorteilhafterweise erfasst der Server in einer Erfassungsphase die Anwenderrechner-spezifischen Kenndaten und speichert diese in einem Register. Nach der Installierung des Serverschutzsystems auf dem Server wird somit zunächst eine Erfassungsphase durchgerührt, in der die Anwenderrechner-spezifischen Kenndaten von Nutzern, beispielsweise die Netzwerkadresse des Anwenderrechners, über den ein Nutzer auf den Server zugreift, ermittelt und gespeichert werden. Die Erfassungsphase des Serverschutzsystems kann neben dem eigentlichen Betrieb des Servers im Hintergrund erfolgen, wobei beispielsweise Anwenderrechner-spezifische Kenndaten auch aus vorab protokollierten Daten ausgelesen werden können.

In der Erfassungsphase kann zudem durch Konfiguration der Einstellungen festgelegt werden, wie auf Abweichungen der Anwenderrechner-spezifischen Kenndaten von den im Register gespeicherten Kenndaten reagiert werden soll.

Nach Abschluss der Erfassungsphase wird in der normalen Betriebsphase dann verfahren wie vorangehend beschrieben, indem zur Bereitstellung einer Berechtigung zum Verfügen über eine gewünschte Leistung die in der Erfassungsphase gespeicherten zusätzlichen Anwenderrechner-spezifischen Kenndaten überprüft und in Abhängigkeit vom Ergebnis dieser Überprüfung die Berechtigung erteilt wird.

In einer vorteilhaften Ausgestaltung kann vorgesehen sein, dass ausschließlich über ein bestimmtes Anwendungsprogramm eines Anwenderrechners auf den Server zugegriffen werden kann, die Verbindung mit dem Server also über das Anwendungsprogramm des Anwenderrechners hergestellt werden muss. Zur weiteren Erhöhung der Sicherheit ist es dann möglich vorzuschreiben, dass das Anwendungsprogramm des Anwenderrechners über ein auf dem Anwenderrechner installiertes Anwendungsschutzsystem ausgeführt werden muss, das ein Administrationsmodul und einen Laufzeitmonitor zum Starten und Überwachen des Anwendungsprogramms umfasst.

Dadurch, dass auf den Server nur über ein vorbestimmtes Anwendungsprogramm zugegriffen und das Anwendungsprogramm nur mittels eines auf dem Anwenderrechner enthaltenen Anwendungsschutzsystems ausgeführt werden kann, wird sichergestellt, dass nichtberechtigte Nutzer nicht auf den Server zugreifen können. Das Anwendungsschutzsystem des Anwenderrechners ist hierbei ausgelegt, eine Manipulation und eine unberechtigte Ausführung des Anwendungsprogramms zu verhindern, so dass bereits auf Seiten des Anwenderrechners gewährleistet wird, dass ein Zugriff auf den Server durch einen nichtberechtigten Nutzer nicht möglich ist.

Das Anwendungsschutzsystem mit seinem Administrationsmodul und seinem Laufzeitmonitor kann so ausgebildet sein, dass in einer Initialisierungsphase vom Administrationsmodul alle Systemdateien des Anwenderrechners erfasst, mit einer Kennung versehen und in einem ersten Register des Anwenderrechners gespeichert werden. In der Initialisierungsphase wird dem Administrationsmodul das vorab auf dem Anwenderrechner installierte Anwendungsprogramm mitgeteilt. Das Administrationsmodul prüft dann, welche Systemdateien und Module von dem Anwendungsprogramm verwendet werden, versieht diese mit einer zusätzlichen Kennung und speichert sie in Form einer Referenzliste in einem zweiten Register des Anwenderrechners.

Im Betrieb kann vorgesehen und durch eine Einstellung festgelegt sein, dass das Anwendungsprogramm ausschließlich über das Administrationsmodul gestartet werden kann.

Das Ausführen des Anwendungsprogramms wird vom Laufzeitmonitor überwacht. Der Laufzeitmonitor bildet hierzu zunächst eine Kennung des Anwendungsprogramms und überprüft, ob diese mit der Kennung des dem Administrationsmodul vorab mitgeteilten Anwendungsprogramms übereinstimmt. Stimmt die Kennung nicht überein, werden vorbestimmte Maßnahmen eingeleitet, beispielsweise der Programmstart abgebrochen. Stimmt die Kennung überein, so wird das Anwendungsprogramm ausgeführt, wobei der Laufzeitmonitor den Zugriff des Anwendungsprogramms auf Systemdateien überwacht.

Der Laufzeitmonitor generiert zudem ein Schutzobjekt, in dem das Anwendungsprogramm ausgeführt wird und welches das Anwendungsprogramm von anderen Programmen und Prozessen isoliert. Das Schutzobjekt verhindert, dass von anderen Programmen und Prozessen auf das Anwendungsprogramm zugegriffen werden kann, und verwendet beispielsweise einen exklusiven Satz von Betriebsmitteln, z. B. eine bestimmte Tastatur und einen bestimmten Bildschirm. Über andere Betriebsmittel, also beispielsweise eine andere Tastatur, kann auf das Anwendungsprogramm dann nicht zugegriffen werden. Jedwede Kontaktaufnahme von außen mit dem Anwendungsprogramm wird auf diese Weise durch das Anwendungsschutzsystem verhindert.

Nach Programmbeendigung baut der Laufzeitmonitor dieses Schutzobjekt rückstandslos ab.

Das Anwendungsprogramm wird somit in einer geschützten Umgebung ausgeführt. Gleichzeitig wird der Zugriff des Anwendungsprogramms auf Systemdateien und Module überwacht, wobei die Systemdateien und Module mit den vorab durch das Administrationsmodul erfassten Systemdateien und Modulen übereinstimmen müssen. Stimmt eine Kennung einer Systemdatei, auf die das Anwendungsprogramm zuzugreifen versucht, mit der vorab gespeicherten Kennung der Systemdatei überein, so wird dem Anwendungsprogramm der Zugriff auf die Systemdatei erlaubt und die Systemdatei geladen. Hierbei wird sowohl überprüft, ob die Kennung der Systemdatei im ersten Register - entsprechend allen Systemdateien des Anwenderrechners - oder im zweiten Register - entsprechend den Systemdateien, die vorab mit dem Anwendungsprogramm assoziiert worden sind - enthalten ist. Bei Auffinden und Übereinstimmen der Systemdatei wird die Systemdatei freigegeben. Wird die Systemdatei in einem oder in beiden Registern hingegen nicht aufgefunden, so wird die Ausführung des Anwendungsprogramms abgebrochen.

Vorteilhafterweise kommunizieren das Anwendungsschutzsystem des Anwenderrechners und der Server zur gegenseitigen Authentisierung miteinander. Die Kommunikation kann hierbei nach dem ISO/IEC 9798-3-Standard erfolgen, wobei sich das Anwendungsschutzsystem und der Server gegenseitig authentisieren und eine Verbindung des Anwenderrechners mit dem Server lediglich zugelassen wird, wenn die gegenseitige Authentisierung des Anwendungsschutzsystems und des Servers erfolgreich ist.

Bei einem Verfahren zum Ausführen eines Anwendungsprogramms auf einem Anwenderrechner wird das Anwendungsprogramm des Anwenderrechners über ein auf dem Anwenderrechner installiertes Anwendungsschutzsystem ausgeführt, das ein Administrationsmodul und einen Laufzeitmonitor zum Starten und Überwachen des Anwendungsprogramms umfasst. Das Anwendungsprogramm wird dabei über das Administrationsmodul gestartet, und der Laufzeitmonitor überwacht bei der Ausführung des Anwendungsprogramms den Zugriff des Anwendungsprogramms auf Systemdateien.

Das Administrationsmodul kann in einer Initialisierungsphase Systemdateien erfassen, mit einer Kennung versehen und in einem ersten Register des Anwenderrechners speichern. In der Initialisierungsphase wird weiterhin geprüft, welche Systemdateien von dem Anwendungsprogramm verwendet werden, und diese Systemdateien werden mit einer zusätzlichen Kennung versehen und in einem zweiten Register des Anwenderrechners gespeichert.

Zudem kann das Anwendungsschutzsystem ein Schutzobjekt bereitstellen, in dem das Anwendungsprogramm ausgeführt wird und das das Anwendungsprogramm von anderen Programmen und Prozessen isoliert.

Mit dem Verfahren zum Ausführen eines Anwendungsprogramms auf einem Anwenderrechner unter Verwendung eines Anwendungsschutzsystems wird ein Schutz ausgewählter Anwendungsprogramme vor Angriffen von außen, insbesondere vor einer Manipulation durch eine schädliche Software, bereitgestellt. Eine zweite mögliche Anwendungsmöglichkeit liegt in einer Versions- und Lizenzkontrolle, im Rahmen derer beispielsweise eine Lizenznummer abgefragt und ein Ausführen des Anwendungsprogramms nur bei Übereinstimmen der Lizenznummer ermöglicht wird.

Das Verfahren geht von zwei Grundprinzipien aus. Nach einem ersten Grundprinzip wird über das Anwendungsschutzsystem erkannt, ob ein Programm mit korrekten oder veränderten Systemdateien, Modulen oder Daten arbeitet. Dieses wird durch den Laufzeitmonitor verwirklicht. Nach einem zweiten Grundprinzip wird das Anwendungsprogramm innerhalb eines Schutzobjektes ausgeführt, das das Anwendungsprogramm von anderen Programmen und Prozessen isoliert und einen Zugriff auf das Anwendungsprogramm von außen unmöglich macht. Das Schutzobjekt kann beispielsweise den Zugriff auf das Anwendungsprogramm lediglich über einen exklusiven Satz von Betriebsmitteln, beispielsweise eine vorbestimmte Tastatur und einen vorbestimmten Bildschirm, ermöglichen, während ein Zugriff mit anderen Mitteln von außen unmöglich ist.

Vorteilhaft ist hierbei insbesondere die Zusammenarbeit des Anwendungsschutzsystems des Anwenderrechners mit dem Serverschutzsystem des Servers für eine gegenseitige Authentisierung, wobei das Anwendungsschutzsystem dem Server Gewissheit verschafft, dass das Anwendungsprogramm nicht manipuliert ist und in einer besonders geschützten Umgebung abläuft, während das Serverschutzsystem für den Anwenderrechner sicherstellt, dass der Anwenderrechner mit dem richtigen Server kommuniziert.

Der der Erfindung zugrunde liegende Gedanke soll nachfolgend anhand der in den Figuren dargestellten Ausführungsbeispiele näher erläutert werden. Es zeigen:
- Fig. 1a bis 1 c: schematische Ansichten der Herstellung einer Verbindung eines Anwenderrechners mit einem Server unter Vornahme einer schwachen Authentisierung;
- Fig. 2a bis 2d: schematische Ansichten der Herstellung einer Verbindung eines Anwenderrechners mit einem Server unter Vornahme einer schwachen und einer nachfolgenden starken Authentisierung und
- Fig. 3: eine schematische Ansicht der Ausführung eines Anwendungsprogramms auf einem Anwenderrechner unter Verwendung eines Anwendungsschutzsystems.

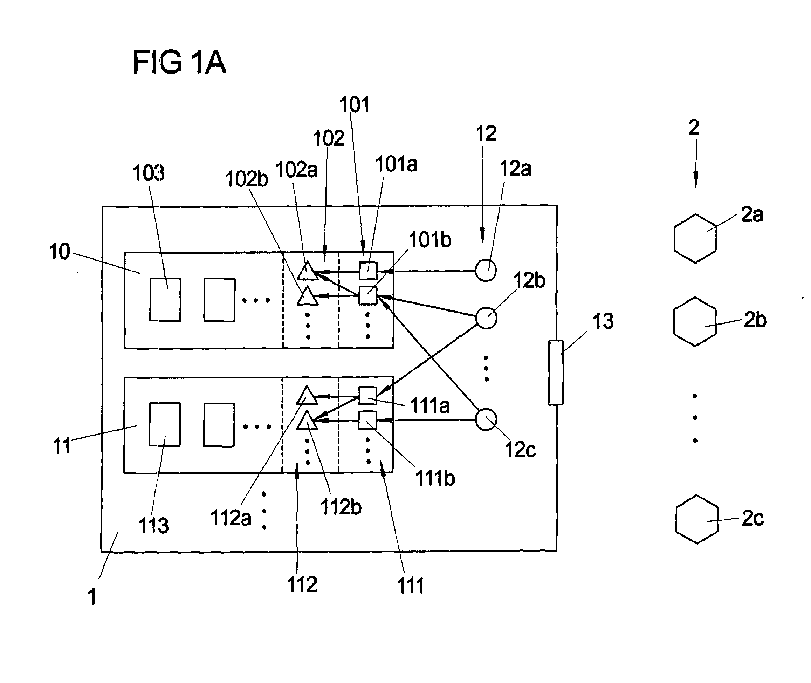

Die schematischen Ansichten gemäß Fig. 1a bis 1c zeigen den Ablauf bei der Herstellung einer Verbindung zwischen einem Anwenderrechner 2 mit einem Server 1 unter Verwendung einer herkömmlichen, schwachen Authentisierung. Der Server 1 ist hierbei als Datenbankserver mit unterschiedlichen Datenbanken 10, 11 ausgebildet.

Der Server 1 bietet Leistungen in Form von Daten 103, 113 an, auf die ein Nutzer über einen Anwenderrechner 2 (Client) und eine Schnittstelle 13 des Servers 1 zugreifen kann. Jedem Nutzer ist dabei ein Login-Konto 12 des Servers 1 zugeordnet, über das sich ein Nutzer mit dem Server 1 verbinden und auf dem Server 1 einloggen kann. Das Login-Konto 12 wiederum ist mit einem Benutzerkonto 101, 111 einer oder mehrerer der Datenbanken 10, 11 verknüpft. Jedes Benutzerkonto 101, 111 wiederum ist mit einer oder mehrerer so genannter Rollen 102, 112 verknüpft, über die auf eine bestimmte Datenmenge der Daten 103, 113 zugegriffen werden kann und in denen die Daten 103, 113 organisiert sind, so dass ein Nutzer auf die Daten 103, 113 zugreifen und mit den Daten 103, 113 arbeiten kann.

Der Zugriff auf die Daten 103, 113 wird einem Nutzer somit über einen Anwenderrechner 2, die Schnittstelle 13, ein dem Nutzer zugeordnetes Login-Konto 12, ein oder mehrere mit dem Login-Konto 12 verknüpfte Benutzerkonten 101, 111 und die Rollen 102, 112 gewährt. Fig. 1a zeigt hier den Zustand vor Herstellung der Verbindung. In diesem Zustand sind die Verknüpfungen zwischen dem Login-Konto 12 eines Nutzers, den Benutzerkonten 101, 111 und den Rollen 102, 112 bereits hergestellt. Mit den Verknüpfungen ist somit definiert, auf welche Datenbanken 10, 11 mit welchen Rollen 102, 112 und Daten 103, 113 ein Nutzer zugreifen kann.

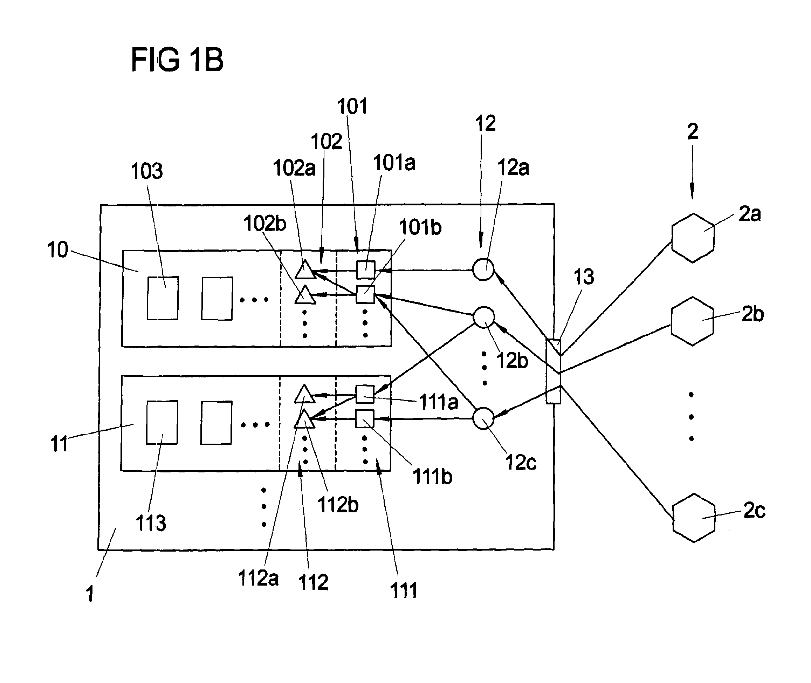

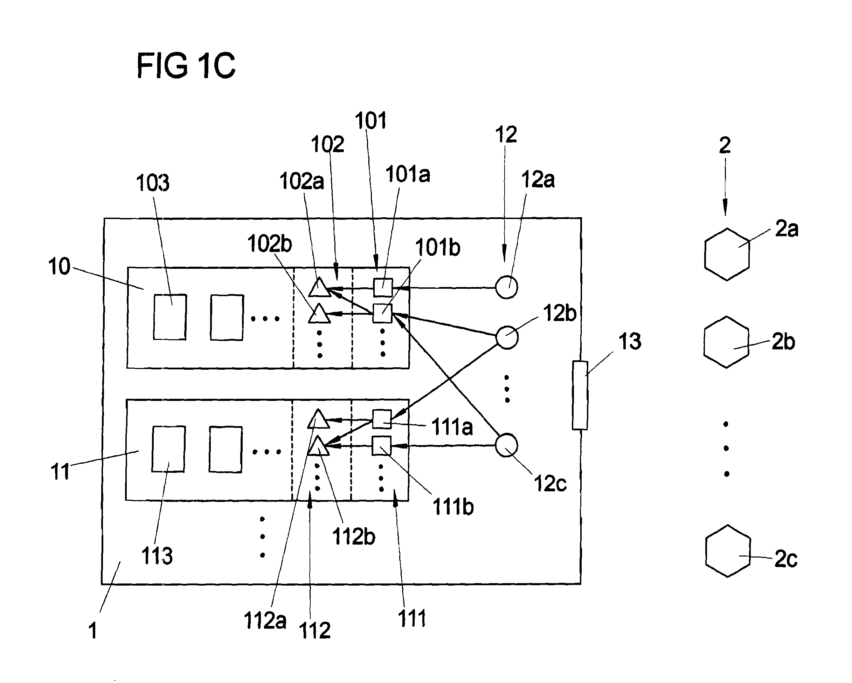

Bei dem in Fig. 1 a dargestellten Beispiel ist das Login-Konto 12a mit dem Benutzerkonto 101a und über das Benutzerkonto 101a mit der Rolle 102a verknüpft. Ein dem Login-Konto 12a zugeordneter Nutzer kann somit über das Login-Konto 12a auf die Rolle 102a der Datenbank 10 mit den assoziierten Daten 103 zugreifen. Das Login-Konto 12b hingegen ist mit dem Benutzerkonto 101b der Datenbank 10 und dem Benutzerkonto 111a der Datenbank 11 verknüpft, wobei das Benutzerkonto 101b der Datenbank 10 mit den Rollen 102a, 102b und das Benutzerkonto 111 a der Datenbank 11 mit den Rollen 112a, 112b verknüpft ist. Der dem Login-Konto 12b zugeordnete Nutzer kann somit auf die mit den Rollen 102a, 102b der Datenbank 10 und den Rollen 112a, 112b der Datenbank 11 assoziierten Daten 103, 113 zugreifen.

Zur Herstellung der Verbindung greift ein Nutzer über einen Anwenderrechner 2 und die Schnittstelle 13 auf ein ihm zugeordnetes Login-Konto 12 zu. Dieses ist schematisch in Fig. 1b dargestellt, wobei beispielsweise ein Nutzer über den Anwenderrechner 2a und die Schnittstelle 13 auf das Login-Konto 12a zugreift. Der Server 1 führt hierbei eine so genannte schwache Authentisierung durch, in deren Rahmen der Nutzernamen und das Passwort des Nutzers abgefragt werden. Stimmen der Nutzername und das Passwort mit dem vorab festgelegten Nutzernamen und Passwort des Login-Kontos 12 überein, so ist die Authentisierung erfolgreich und dem Nutzer wird die Berechtigung zum Zugriff auf die Datenbanken 10, 11 entsprechend der vorab definierten Verknüpfungen erteilt.

Nach Beendigung der Verbindung, also nachdem der Nutzer sich ausgeloggt hat, wird zwar die Verbindung des Anwenderrechners 2 mit dem jeweils zugeordneten Login-Konto 12 unterbrochen. Die Verknüpfungen des Login-Kontos 12 mit den jeweiligen Benutzerkonten 101, 111 bleiben jedoch erhalten. Dieser Zustand ist in Fig. 1c dargestellt.

Herkömmlich führt ein Server 1 lediglich eine schwache Authentisierung mittels Abfrage eines Nutzernamens und eines Passworts durch. Die hierdurch erreichbare Sicherheit ist jedoch gering. Insbesondere können Angriffe von außen und der Zugriff durch nichtberechtigte Nutzer nur unzureichend unterbunden werden, wobei ein Nutzer, sobald ihm über ein zugeordnetes Login-Konto 12 der Zugriff gewährt ist, unbeschränkt über die ihm zur Verfügung gestellten Daten 103, 113 verfügen, diese manipulieren und im schlimmsten Fall den Betrieb des Servers 1 nachhaltig beeinträchtigen kann.

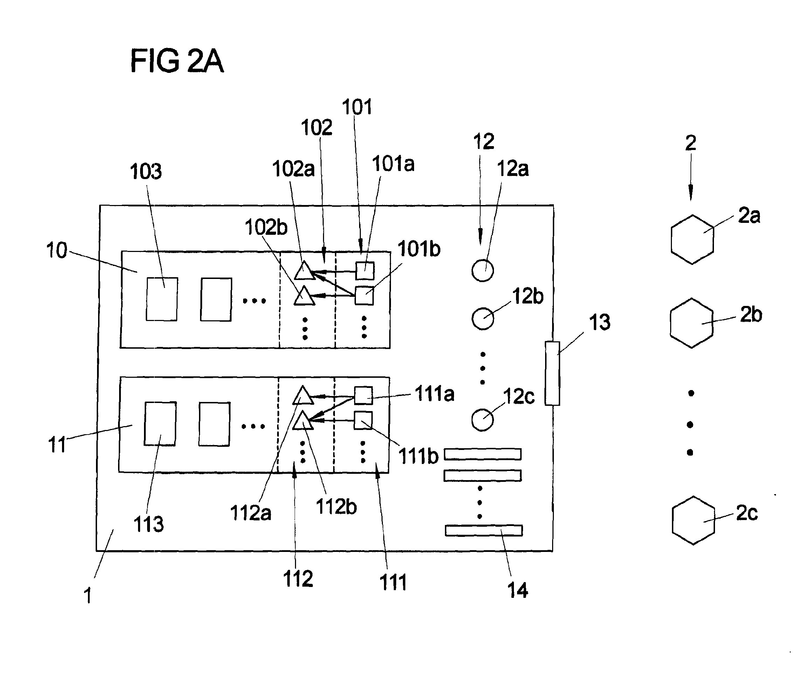

Bei dem in Fig. 2a bis 2d dargestellten Ausführungsbeispiel wird daher zusätzlich zu der vorangehend geschilderten schwachen Authentisierung ein weiterer Authentisierungsschritt durchgeführt, der als starke Authentisierung bezeichnet werden kann. Bei dem in Fig. 2a bis Fig. 2d dargestellten Ausführungsbeispiel enthält der Server 1 zusätzlich ein Register 14, auf dem Anwenderrechner-spezifische Kenndaten der Anwenderrechner 2 und der zugeordneten Nutzer in Form von Referenzlisten gespeichert sind. Die Authentisierung zur Herstellung der Verbindung eines Anwenderrechners 2 mit dem Server 1 und zur Bereitstellung der vom Server 1 angebotenen Leistung in Form der Daten 103, 113 erfolgt dann in der in Fig. 2a bis Fig. 2d veranschaulichten Weise.

Fig. 2a zeigt den Ausgangszustand vor Herstellung einer Verbindung. In diesem Zustand bestehen keine Verknüpfungen der Login-Konten 12 mit zugeordneten Benutzerkonten 101, 111.

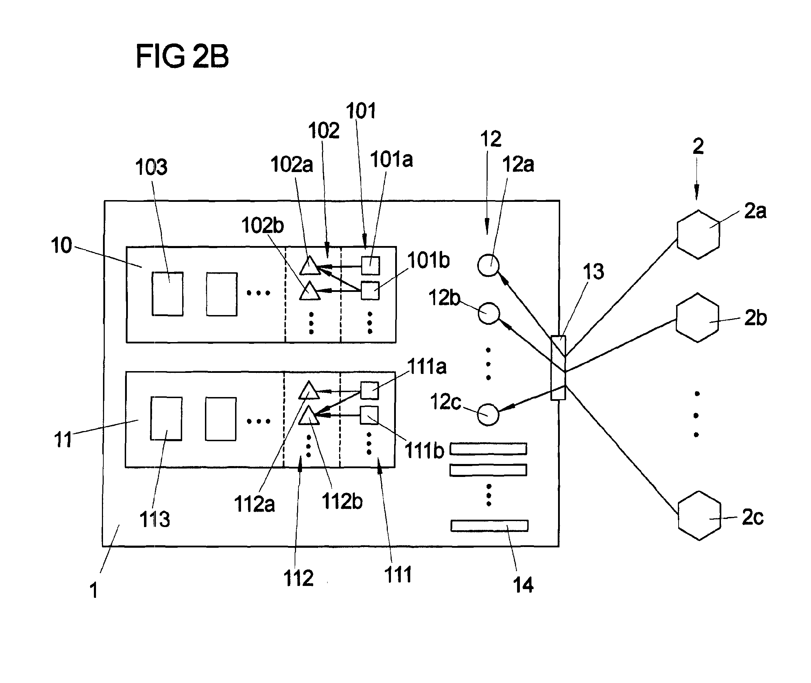

In einem ersten Schritt stellt ein Nutzer über einen Anwenderrechner 2 und die Schnittstelle 13 des Servers 1 eine Verbindung mit einem zugeordneten Login-Konto 12 her, wobei im Rahmen eines ersten Authentisierungsschritts eine schwache Authentisierung durch Abfrage eines Nutzernamens und Passworts durchgeführt wird. Dieses ist in Fig. 2b dargestellt. In dem dargestellten Beispiel stellt dabei beispielsweise ein Nutzer über einen Anwenderrechner 2a eine Verbindung mit dem zugeordneten Login-Konto 12a her.

In dem in Fig. 2b dargestellten Zustand ist der Anwenderrechner 2 über die Schnittstelle 13 mit dem Server 1 und dem zugeordneten Login-Konto 12 verbunden. Der Zugriff auf die Daten 103, 113 wird dem Nutzer jedoch noch nicht gewährt, da noch keine Verknüpfung des Login-Kontos 12 mit zugeordneten Benutzerkonten 101, 111 hergestellt ist.

In einem zweiten Schritt erfolgt nun eine so genannte starke Authentisierung, im Rahmen derer zusätzliche Anwenderrechner-spezifische Kenndaten abgefragt und mit vorab in dem Register 14 gespeicherten Kenndaten verglichen werden. Bei den Anwenderrechner-spezifischen Kenndaten kann es sich hierbei beispielsweise um zusätzliche persönliche Angaben eines Nutzers handeln, die der Nutzer über den Anwenderrechner 2 an den Server 1 übermittelt. Alternativ oder zusätzlich kann im Rahmen der Anwenderrechner-spezifischen Kenndaten auch die Netzwerkadresse (IP-Adresse oder Mac-Adresse) des Anwenderrechners 2 überprüft werden. Diesem liegt zugrunde, dass einem Nutzer ein Zugriff auf den Server 1 nur über einen bestimmten Anwenderrechner 2 mit einer vorbestimmten Netzwerkadresse gewährt werden soll. Als zusätzliche Anwenderrechner-spezifische Kenndaten können zudem auch die Kennung eines vorbestimmten Anwendungsprogramms oder ein vorbestimmtes Zeitfenster verwendet werden. Damit wird einem Nutzer ein Zugriff nur über ein bestimmtes Anwendungsprogramm oder nur innerhalb eines vorbestimmten Zeitfensters ermöglicht.

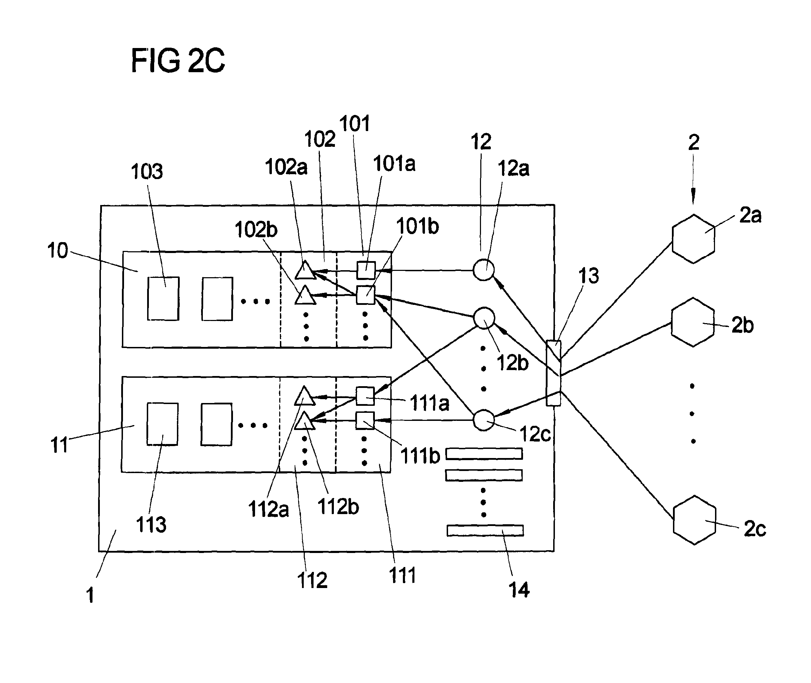

Ist diese zweite Authentisierung erfolgreich, so werden die vordefinierten Verknüpfungen des Login-Kontos 12 mit den Benutzerkonten 101, 111 hergestellt. Bei dem in Fig. 2c dargestellten Beispiel wird so beispielsweise das Login-Konto 12a mit dem Benutzerkonto 101 a verknüpft, während das Login-Konto 12b mit den Benutzerkonten 101 b, 111 a verbunden wird. Über die Benutzerkonten 101, 111 und die zugeordneten Rollen 102, 112 kann der Nutzer somit auf die Daten 103, 113 zugreifen und über die Daten 103, 113 verfügen.

Der zweite Authentisierungsschritt mittels der in den Registern 14 gespeicherten Anwenderrechner-spezifischen Kenndaten erfolgt über ein auf dem Server 1 installiertes Serverschutzsystem. Wesentlich ist hierbei, dass der Server 1 zunächst eine schwache Authentisierung zur Verbindung eines Anwenderrechners 2 mit einem zugeordneten Login-Konto 12 durchführt. Damit ist die Authentisierung für den Server 1 abgeschlossen. Die Verbindung des Nutzers mit dem zugeordneten Login-Konto 12 ist hergestellt. In diesem Zustand kann der Nutzer jedoch noch nicht auf die Daten 103, 113 zugreifen, da die Verknüpfungen zwischen dem Login-Konto 12 und den zugeordneten Benutzerkonten 101, 111 noch nicht eingerichtet sind. Die weitere Authentisierung übernimmt das Serverschutzsystem über die Register 14 und die Überprüfung der zusätzlichen Anwenderrechner-spezifischen Kenndaten, wobei in Abhängigkeit von der Überprüfung das jeweilige Login-Konto 12 mit den zugeordneten Benutzerkonten 101, 111 verknüpft wird. Die Authentisierung ist somit zweigeteilt. Nach einem ersten Authentisierungsschritt, durchgeführt durch den Server 1, erfolgt ein zweiter Authentisierungsschritt, durchgeführt durch das Serverschutzsystem mittels der Register 14, wobei in Abhängigkeit von erfolgreicher erster und zweiter Authentisierung der Zugriff auf die Daten 103, 113 gewährt wird.

Ist sowohl die erste Authentisierung des Servers 1 zur Herstellung der Verbindung eines Anwenderrechners 2 mit einem zugeordneten Login-Konto 12 über die Schnittstelle 13 als auch die zweite Authentisierung durch Überprüfung der Anwenderrechner-spezifischen Kenndaten erfolgreich, so werden die in Fig. 2c dargestellten Verknüpfungen des Login-Kontos 12 mit den zugeordneten Benutzerkonten 101, 111 hergestellt, und der Benutzer kann auf die Datenbanken 10, 11 zugreifen.

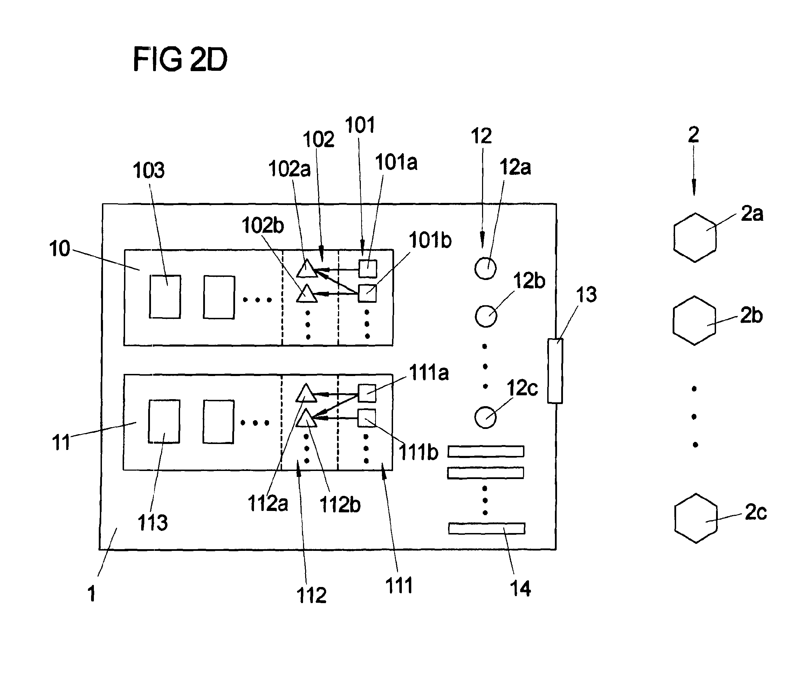

Nach Beendigung der Verbindung wird, wie in Fig. 2d dargestellt, zum einen die Verbindung zwischen dem Anwenderrechner 2 und dem zugeordneten Login-Konto 12 unterbrochen und gleichzeitig auch jede Verknüpfung zwischen dem Login-Konto 12 und den Benutzerkonten 101, 111 gelöscht. Die Verknüpfungen zwischen dem Login-Konto 12 und den Benutzerkonten 101, 111 werden somit vollständig abgebaut und erst bei erneutem Einloggen und bei erfolgreicher erneuter Authentisierung wieder hergestellt.

Dadurch, dass eine zusätzliche, auch als stark bezeichnete Authentisierung durch Überprüfung der zusätzlichen Anwenderrechner-spezifischen Kenndaten durchgeführt wird, wird die Sicherheit für den Betrieb des Servers 1 erheblich gesteigert. Insbesondere wird durch die zusätzliche Überprüfung der Anwenderrechner-spezifischen Kenndaten verhindert, dass nichtberechtigte Nutzer auf den Server 1 zugreifen können. Damit ist sichergestellt, dass ein Zugriff beispielsweise nur über einen vorbestimmten Rechner mit einer bestimmten Netzwerkadresse oder über ein bestimmtes Anwendungsprogramm erfolgen kann. Weiterhin kann ein Zugriff nur während bestimmter Zeiten gewährt werden.

Ist die zusätzliche Authentisierung nicht erfolgreich, können unterschiedliche Maßnahmen ergriffen werden. Beispielsweise ist denkbar, bei nicht erfolgreicher Authentisierung einem Nutzer den Zugriff vollständig zu verwehren. Schlägt so beispielsweise die erste Authentisierung bei Abfrage des Nutzernamens und Passworts bereits fehl, wird dem Nutzer der Zugang vollständig verwehrt. Gleiches gilt, wenn zwar die erste Authentisierung erfolgreich ist, die zusätzliche Authentisierung durch Abfrage der Anwenderrechner-spezifischen Kenndaten aber nicht erfolgreich ist, beispielsweise, weil die Netzwerkadresse des Anwenderrechners 2, über den der Nutzer auf den Server 1 zuzugreifen versucht, nicht mit einer vorab gespeicherten Netzwerkadresse übereinstimmt.

Anstelle einer Zugriffsverwehrung sind jedoch auch weniger rigorose Maßnahmen denkbar. Beispielsweise kann einem Nutzer trotz erfolgloser Authentisierung ein Zugang gewährt werden, wobei dem Nutzer jedoch andere als die gewünschten Daten bereitgestellt werden (so genannter Honey Pot). Ebenso ist denkbar, den Zugang zu gewähren und die richtigen, gewünschten Daten bereitzustellen, den Nutzer jedoch unter Beobachtung zu stellen, also seine Aktionen in besonderer Weise zu überwachen. Wiederum alternativ ist denkbar, den Zugang zunächst nicht zu gewähren und weitere Kenndaten zur weiteren Authentisierung abzufragen und erst in Abhängigkeit von dieser weiteren Authentisierung den Zugang zu gewähren oder endgültig zu verweigern.

Die Anwenderrechner-spezifischen Kenndaten, die bei der zusätzlichen Authentisierung abgefragt werden sollen, können in einer Erfassungsphase vor dem eigentlichen Betrieb des Servers 1 erfasst und in dem Register 14 gespeichert werden. In der Erfassungsphase werden dann beispielsweise die Netzwerkadresse und das zu verwendende Anwendungsprogramm ermittelt und in dem Register 14 hinterlegt, wobei in der späteren Betriebsphase während des eigentlichen Betriebs des Servers 1 ein Zugriff auf den Server 1 lediglich über den vorab bestimmten Anwenderrechner 2 mit der vorbestimmten Netzwerkadresse oder das vorbestimmte Anwendungsprogramm ermöglicht wird. In der Erfassungsphase kann das Serverschutzsystem im Hintergrund arbeiten, wobei noch keine oder zumindest noch keine vollständige starke Authentisierung durchgeführt wird. In einer Betriebsphase nach Abschluss der Erfassungsphase wird dann ein Zugriff nur in Abhängigkeit von einer erfolgreichen Authentisierung in der oben beschriebenen Weise gewährt.

Eine zusätzliche Sicherheit kann erreicht werden, wenn einem Nutzer ein Zugriff auf den Server 1 nur ausschließlich über ein vorbestimmtes Anwendungsprogramm erlaubt wird. Wird dabei das Anwendungsprogramm auf dem Anwenderrechner 2 mittels eines Anwendungsschutzsystems ausgeführt, so ist von vornherein ausgeschlossen, dass ein nichtberechtigter Nutzer über einen beliebigen Anwenderrechner und ein beliebiges Anwendungsprogramm auf den Server 1 zugreifen kann.

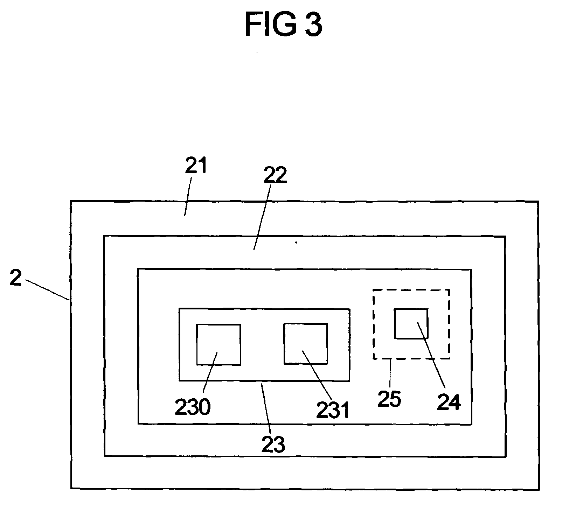

Fig. 3 zeigt eine schematische Ansicht eines auf einem Anwenderrechner 2 installierten Anwendungsprogramms 24. Auf dem Anwenderrechner 2 ist dabei zum einen ein Schutzwall 21 (Fire Wall) sowie ein Virenscanner 22 installiert, die einen Zugriff von außen auf den Anwenderrechner 2 sowie eine Manipulation durch eine schädliche Software weitestgehend in an sich bekannter Weise unterbinden. Zusätzlich ist auf dem Anwenderrechner 2 ein Anwendungsschutzsystem 23 mit einem Administrationsmodul 230 und einem Laufzeitmonitor 231 installiert, das das Starten und das Ausführen des Anwendungsprogramms 24 überwacht und steuert.

Das Administrationsmodul 230 des Anwendungsschutzsystems 23 dient zur Verwaltung. Das Administrationsmodul 230 erfasst dabei in einer Initialisierungsphase sämtliche Systemdateien des Anwenderrechners 2 und speichert diese in einem Register in Form einer Referenzliste. Das Administrationsmodul 230 ermittelt dabei für jede Systemdatei und jedes Modul eine Kennung, beispielsweise in Form eines cryptographischen Hashwerts oder einer digitalen Signatur, und legt diese in dem Register ab. Dem Administrationsmodul 230 wird dann eine Kennung des unter Schutz zu stellenden Anwendungsprogramms 24 mitgeteilt, worauf das Administrationsmodul 230 für das Anwendungsprogramm 24 die Systemdateien und Module des Anwenderrechners 2 erfasst, auf das das Anwendungsprogramm 24 zugreift. Wiederum ermittelt das Administrationsmodul 230 für jede so erfasste Systemdatei eine Kennung und speichert diese zusammen mit der Kennung des Anwendungsprogramms 24 in einem gesonderten Register ab.

Zusätzlich wird festgelegt, dass das Starten des Anwendungsprogramms 24 ausschließlich über das Administrationsmodul 230 erfolgen darf. Damit wird jeder Startversuch des Anwendungsprogramms 24 nicht über das Administrationsmodul 230 von vorneherein ausgeschlossen.

Zum Ausführen des Anwendungsprogramms 24 wird dieses über das Administrationsmodul 230 gestartet. Das Ausführen des Anwendungsprogramms 24 wird dann über den Laufzeitmonitor 231 überwacht, wobei der Laufzeitmonitor 231 zunächst die Kennung des Anwendungsprogramms 24 mit der vorab durch das Administrationsmodul 230 im Register gespeicherten Kennung des Anwendungsprogramms 24 vergleicht. Nur wenn diese Kennung übereinstimmt, wird das Starten und Ausführen des Anwendungsprogramms 24 zugelassen.

Der Laufzeitmonitor 231 generiert ein Schutzobjekt 25 in Form eines Betriebssystemobjekts und stattet dieses mit besonderen Schutzeigenschaften aus. Das Anwendungsprogramm 24 wird in diesem Schutzobjekt 25 ausgeführt, wobei das Schutzobjekt 25 das Anwendungsprogramm 24 von allen anderen Programmen und Prozessen des Anwenderrechners 2 isoliert und jedwede Kontaktaufnahme auf das Anwendungsprogramm 24 von außen unmöglich macht. Das Schutzobjekt 25 verfügt dabei über einen exklusiven Satz von Betriebsmitteln, beispielsweise eine bestimmte Tastatur und einen bestimmten Bildschirm, über die das Anwendungsprogramm 24 gesteuert werden kann.

Bis zu seiner Beendigung wird das Anwendungsprogramm 24 in dem Schutzobjekt 25 ausgeführt. Nach Beendigung des Anwendungsprogramms 24 wird das Schutzobjekt 25 rückstandslos abgebaut.

Während der Ausführungszeit des Anwendungsprogramms 24 überwacht der Laufzeitmonitor 231 jede Anfrage des Anwendungsprogramms 24 auf eine Systemdatei oder ein Modul des Anwenderrechners 2 und überprüft, ob die Kennung der Systemdatei oder des Moduls in den von dem Administrationsmodul 230 im Rahmen der Initialisierungsphase vorab gespeicherten Registern enthalten ist. Der Laufzeitmonitor 231 überprüft dabei, ob die Kennung der Systemdatei in dem Register aller Systemdateien des Anwenderrechners 2 oder in dem Register der dem Anwendungsprogramm 24 zugeordneten Systemdateien oder Module enthalten ist. Befindet sich die angefragte Systemdatei nicht in einem oder in beiden der Register, wird die Ausführung des Anwendungsprogramms 24 abgebrochen. Befindet sich die Systemdatei in beiden Registern, so wird die angefragte Systemdatei oder das angefragte Modul freigegeben und die Ausführung des Anwendungsprogramms 24 fortgesetzt.

Mittels des Anwendungsschutzsystems 23 wird die Ausführung eines Anwendungsprogramms 24 überwacht und gesteuert und so vor Angriffen von außen, beispielsweise durch eine schädliche Software, geschützt. Gleichzeitig kann durch das Anwendungsschutzsystem 23 beispielsweise eine Versions- und Lizenzkontrolle erfolgen, indem bei der Ausführung beispielsweise überprüft wird, ob das Anwendungsprogramm 24 unter einer gültigen Lizenznummer ausgeführt wird.

In einer vorteilhaften Ausgestaltung wirken das Anwendungsschutzsystem 23 des Anwenderrechners 2 und das Serverschutzsystem des Servers 1 zusammen. Das Anwendungsschutzsystem 23 kommuniziert hierbei mit dem Server 1, wobei sich der Server 1 und das Anwendungsschutzsystem 23 gegenseitig authentisieren. Die Kommunikation kann beispielsweise über den ISO/IEC 9798-3-Standard erfolgen. Das Anwendungsschutzsystem nimmt dabei in einem ersten Schritt Kontakt mit dem Server 1 auf. In einem zweiten Schritt führen das Anwendungsschutzsystem 23 und der Server 1 eine gegenseitige Authentisierung durch, wobei durch die gegenseitige Authentisierung der Server 1 zum einen weiß, dass das Anwendungsprogramm 24 nicht manipuliert ist, und der Anwenderrechner 2 zum anderen sicher sein kann, mit dem richtigen Server 1 zu kommunizieren.

Die Kommunikation zwischen Server 1 und Anwenderrechnern 2 in den vorangehend geschilderten Beispielen erfolgt vorzugsweise über das Internet, das in bekannter Weise ein Kommunikationsnetzwerk zum Datenaustausch zwischen unterschiedlichen Rechnern und Rechnersystemen darstellt.

Der der Erfindung zugrunde liegende Gedanke ist nicht auf die vorangehend geschilderten Ausführungsbeispiele beschränkt, sondern lässt sich vielmehr auch bei gänzlich anders gearteten Ausführungsformen verwirklichen. Insbesondere sind die geschilderten Schutzsysteme nicht auf die Anwendung für einen Datenbankserver beschränkt, sondern können allgemein zum Schutz eines Servers eingesetzt werden. Zudem kann das vorgestellte System auch als forensisches Mittel eingesetzt werden, um Verstöße gegen Zugangsregelungen detailliert zu analysieren.

### Bezugszeichenliste

- 1: Server
- 10,11: Datenbank
- 101, 111, 101a, 101b, 111a, 111b: Benutzerkonto
- 102, 112, 102a, 102b, 112a, 112b: Rollen
- 103, 113: Daten
- 12, 12a, 12b, 12c: Login-Konto
- 13: Schnittstelle
- 14: Register
- 2, 2a, 2b, 2c: Anwenderrechner
- 21: Schutzwall
- 22: Virenscanner
- 23: Anwendungsschutzsystem
- 230: Administrationsmodul
- 231: Laufzeitmonitor
- 24: Anwendungsprogramm
- 25: Schutzobjekt

## Patentansprüche

1. Serversystem zur Bereitstellung mindestens einer Leistung, mit
- einer Schnittstelle zur Verbindung eines Servers mit einem Anwenderrechner, über den sich ein Nutzer mit dem Server verbindet, um Zugang zu einer vom Server angebotenen Leistung zu erhalten, und
- einem Authentisierungsmittel, das ausgebildet und vorgesehen ist, in einem ersten Schritt persönliche Kenndaten eines Nutzers, der sich über den Anwenderrechner mit dem Server verbindet, abzufragen und dem Anwenderrechner bei erfolgreicher Authentisierung einen Zugang zu erlauben,
**gekennzeichnet durch**
ein Serverschutzsystem, das ausgebildet und vorgesehen ist,
- nach erfolgreicher Authentisierung **durch** das Authentisierungsmittel in dem ersten Schritt zusätzliche Anwenderrechner-spezifische Kenndaten mit vorab auf dem Server (1) gespeicherten Kenndaten in einem zweiten Schritt zu vergleichen und
- dem Anwenderrechner (2) die Berechtigung zum Verfügen über die mindestens eine Leistung (103, 113) in Abhängigkeit von dem Vergleich der Anwenderrechner-spezifischen Kenndaten zu erteilen,
wobei die Berechtigung zum Verfügen über die mindestens eine Leistung (103, 113) nach Unterbrechung der Verbindung des Servers (1) mit dem Anwenderrechner (2) gelöscht wird.

2. Verfahren zum Bereitstellen einer Leistung über ein Serversystem, bei dem
- sich ein Nutzer über einen Anwenderrechner mit einem Server verbindet, um Zugang zu einer vom Server angebotenen Leistung zu erhalten,
- der Server zur Authentisierung in einem ersten Schritt persönliche Kenndaten des Nutzers abfragt und
- der Server dem Anwenderrechner bei erfolgreicher Authentisierung einen Zugang erlaubt,
**dadurch gekennzeichnet,**
**dass**
- nach erfolgreicher Authentisierung in dem ersten Schritt zusätzliche Anwenderrechner-spezifische Kenndaten mit vorab auf dem Server (1) gespeicherten Kenndaten in einem zweiten Schritt verglichen werden und
- dem Anwenderrechner (2) die Berechtigung zum Verfügen über die mindestens eine Leistung (103, 113) in Abhängigkeit von dem Vergleich der Anwenderrechner-spezifischen Kenndaten erteilt wird und
- die Berechtigung zum Verfügen über die mindestens eine Leistung (103, 113) nach Unterbrechung der Verbindung des Servers (1) mit dem Anwenderrechner (2) gelöscht wird.

3. Verfahren nach Anspruch 2, **dadurch gekennzeichnet, dass** es sich bei den persönlichen Kenndaten des Nutzers um einen Nutzernamen und ein Passwort und bei den zusätzlichen Anwenderrechner-spezifischen Kenndaten um persönliche Daten eines Nutzers, eine Netzwerkadresse des Anwenderrechners (2), ein Anwendungsprogramm (24) des Anwenderrechners (2) und/oder ein vorbestimmtes Zeitfenster handelt.

4. Verfahren nach 2 oder 3, **dadurch gekennzeichnet, dass** der Nutzer die Anwenderrechner-spezifischen Kenndaten über den Anwenderrechner (2) an den Server (1) übermittelt oder der Anwenderrechner (2) die Anwenderrechner-spezifischen Kenndaten automatisch an den Server (1) übermittelt.

5. Verfahren nach einem der Ansprüche 2 bis 4, **dadurch gekennzeichnet, dass** der Server als Datenbankserver (1) ausgebildet ist und die vom Datenbankserver (1) angebotene Leistung in der Bereitstellung von vorbestimmten Daten (103, 113) besteht.

6. Verfahren nach einem der Ansprüche 2 bis 5, **dadurch gekennzeichnet, dass** in einer Erfassungsphase die Anwenderrechner-spezifischen Kenndaten vom Server (1) erfasst und in einem Register (14) gespeichert werden.

7. Verfahren nach Anspruch 6, **dadurch gekennzeichnet, dass** in der Erfassungsphase festgelegt wird, wie auf Abweichungen der Anwenderrechner-spezifischen Kenndaten von den im Register (14) gespeicherten Kenndaten reagiert wird.

8. Verfahren nach einem der Ansprüche 2 bis 7, **dadurch gekennzeichnet, dass** ein Anwendungsprogramm (24) des Anwenderrechners (2) die Verbindung mit dem Server (1) herstellt.

9. Verfahren nach Anspruch 8, **dadurch gekennzeichnet, dass** das Anwendungsprogramm (24) des Anwenderrechners (2) über ein auf dem Anwenderrechner (2) installiertes Anwendungsschutzsystem (23) ausgeführt wird, das ein Administrationsmodul (230) und einen Laufzeitmonitor (231) zum Starten und Überwachen des Anwendungsprogramms (24) umfasst.

10. Verfahren nach Anspruch 9, **dadurch gekennzeichnet, dass** das Administrationsmodul (230) in einer Initialisierungsphase Systemdateien erfasst, mit einer Kennung versieht und in einem ersten Register des Anwenderrechners (2) speichert.

11. Verfahren nach Anspruch 10, **dadurch gekennzeichnet, dass** in der Initialisierungsphase für ein Anwendungsprogramm (24) geprüft wird, welche Systemdateien von dem Anwendungsprogramm (24) verwendet werden, und diese Systemdateien mit einer zusätzlichen Kennung versehen und in einem zweiten Register des Anwenderrechners (2) gespeichert werden.

12. Verfahren nach einem der Ansprüche 9 bis 11, **dadurch gekennzeichnet, dass** das Anwendungsprogramm (24) ausschließlich über das Administrationsmodul (230) gestartet wird.

13. Verfahren nach einem der Ansprüche 9 bis 12, **dadurch gekennzeichnet, dass** der Laufzeitmonitor (231) bei der Ausführung des Anwendungsprogramms (24) den Zugriff auf Systemdateien durch das Anwendungsprogramm (24) überwacht.

14. Verfahren nach einem der Ansprüche 9 bis 13, **dadurch gekennzeichnet, dass** das Anwendungsschutzsystem (23) ein Schutzobjekt (25) bereitstellt, in dem das Anwendungsprogramm (24) ausgeführt wird und das das Anwendungsprogramm (24) von anderen Programmen und Prozessen isoliert.

15. Verfahren nach einem der Ansprüche 9 bis 14, **dadurch gekennzeichnet, dass** das Anwendungsschutzsystem (23) und der Server (1) zur gegenseitigen Authentisierung miteinander kommunizieren.

## Claims

1. Server system for providing at least one service with
- an interface for connecting a server to a user's computer via which a user logs onto the server for obtaining access to the service offered by the server, and
- an authentication means that is designed and provided to request, in a first step, personal identification data of the user who logs onto the server via the user's computer and to permit the user computer access if authentication is successful,
**characterized by** a server protection system which is designed and provided,
- to compare, in a second step, additional user's computer specific identification data with identification data stored in advance on the server (1) after successful authentication by the authentication means in the first step and
- to grant authorization to the user's computer (2) to access the at least one service (103, 113) in dependency on the comparison of the user's computer specific identification data,
wherein the authorization for having the at least one service (103, 113) is deleted after interrupting the connection of the server (1) to the user's computer (2).

2. Method for providing at least one service via a server system, in which
- a user logs onto a server via a user's computer for obtaining access to a service offered by the server,
- the server requests, in a first step, personal identification data of the user for authentication and
- the server allows the user's computer access after successful authentication
**characterized in that**
- additional user's computer specific identification data are compared, in a second step, with identification data stored in advance on the server (1) after successful authentication in the first step and
- authorization is granted to the user's computer (2) to access the at least one service (103, 113) in dependency on the comparison of the user's computer specific identification data and
- the authorization for having the at least one service (103, 113) is deleted after interrupting the connection of the server (1) to the user's computer (2).

3. Method according to claim 2, **characterized in that** the personal identification data of the user are a user name and a password and the additional user's computer specific identification data are personal data of a user, a network address of the user's computer (2), an application program (24) of the user's computer (2) and/or a pre-determined time window.

4. Method according to claim 2 or 3, **characterized in that** the user transfers the user's computer specific identification data via the user's computer (2) to the server (1) or the user's computer (2) transfers automatically the user's computer specific identification data to the server (1).

5. Method according to one of the claims 2 to 4, **characterized in that** the server is provided as a database server (1) and the service offered by the database server (1) consists in providing predetermined data (103, 113).

6. Method according to one of the claims 2 to 5, **characterized in that** in a detection phase the user's computer specific identification data are registered by the server (1) and are stored in a registry (14).

7. Method according to claim 6, **characterized in that** in the detection phase it is determined how it is responded to deviations of the user's computer specific identification data from the identification data stored in the registry (14).

8. Method according to one of the claims 2 to 7, **characterized in that** an application program (24) of the user's computer (2) provides the connection to the server (1).

9. Method according to claim 8, **characterized in that** the application program (24) of the user's computer (2) is conducted via an application protection system (23) installed on the user's computer (2), wherein said protection system comprises an administration module (230) and a running time monitor (231) for starting and monitoring the application program (24).

10. Method according to claim 9, **characterized in that** the administration module (230) detects system files in a initialization phase, provides them with an identification and stores them in a first registry of the user's computer (2).

11. Method according to claim 10, **characterized in that** it is examined for an application program (24) in the initialization phase, which system files are used by the application program (24), and these system files are provided with an additional identification and are stored in a second registry of the user's computer (2).

12. Method according to one of the claims 9 to 11, **characterized in that** the application program (24) is exclusively started via the administration module (230).

13. Method according to one of the claims 9 to 12, **characterized in that** the running time monitor (231) monitors the access to the system files by the application program (24) when the application program (24) is conducted.

14. Method according to one of the claims 9 to 13, **characterized in that** the application protection system (23) provides a protection object (25), in which the application program (24) is conducted and which isolates the application program (24) from other programs and processes.

15. Method according to one of the claims 9 to 14, **characterized in that** the application protection system (23) and the server (1) communicate with each other for mutual authentication.

## Revendications

1. Système serveur servant à fournir au moins un service, comprenant :
- une interface servant à connecter un serveur à un ordinateur utilisateur, par l'intermédiaire duquel un utilisateur se connecte au serveur afin d'avoir accès à un service proposé par le serveur, et
- un moyen d'authentification, qui est réalisé et prévu afin de demander, lors d'une première étape, des données caractéristiques personnelles d'un utilisateur, qui se connecte au serveur par l'intermédiaire de l'ordinateur utilisateur, et afin de permettre un accès à l'ordinateur utilisateur dans le cas d'une authentification réalisée avec succès,
**caractérisé par** un système de protection de serveur, qui est réalisé et prévu afin
- de comparer dans une deuxième étape, après l'authentification réalisée avec succès par le moyen d'authentification lors de la première étape, des données caractéristiques spécifiques à l'ordinateur utilisateur supplémentaires à des données caractéristiques stockées au préalable sur le serveur (1), et
- de délivrer à l'ordinateur utilisateur (2) l'autorisation de disposer de l'au moins un service (103, 113) en fonction de la comparaison des données caractéristiques spécifiques à l'ordinateur utilisateur,
l'autorisation de mise à disposition de l'au moins un service (103, 113) étant supprimée après l'interruption de la connexion du serveur (1) à l'ordinateur utilisateur (2).

2. Procédé servant à fournir une prestation par l'intermédiaire d'un système serveur, dans lequel
- un utilisateur se connecte, par l'intermédiaire d'un ordinateur utilisateur, à un serveur afin d'obtenir l'accès à un service proposé par le serveur,
- le serveur demande des données caractéristiques personnelles de l'utilisateur à des fins d'authentification lors d'une première étape, et
- le serveur permet un accès à l'ordinateur utilisateur en cas d'authentification réalisée avec succès,
**caractérisé en ce que**
- lors d'une deuxième étape après l'authentification réalisée avec succès lors de la première étape, des données caractéristiques spécifiques à l'ordinateur utilisateur sont comparées à des données caractéristiques stockées au préalable sur le serveur (1),
- l'autorisation de mise à disposition de l'au moins un service (103, 113) est délivrée à l'ordinateur utilisateur (2) en fonction de la comparaison des données caractéristiques spécifiques à l'ordinateur utilisateur, et
- l'autorisation de mise à disposition de l'au moins un service (103, 113) est supprimée après l'interruption de la connexion du serveur (1) à l'ordinateur utilisateur (2).

3. Procédé selon la revendication 2, **caractérisé en ce que** les données caractéristiques personnelles de l'utilisateur sont un nom d'utilisateur et un mot de passe, et **en ce que** les données caractéristiques supplémentaires spécifiques à l'ordinateur utilisateur sont des données personnelles d'un utilisateur, une adresse de réseau de l'ordinateur utilisateur (2), un programme d'application (24) de l'ordinateur utilisateur (2) et/ou une fenêtre de temps prédéfinie.

4. Procédé selon la revendication 2 ou 3, **caractérisé en ce que** l'utilisateur transmet les données caractéristiques spécifiques à l'ordinateur utilisateur au serveur (1) par l'intermédiaire de l'ordinateur utilisateur (2), ou **en ce que** l'ordinateur utilisateur (2) transmet automatiquement au serveur (1) les données caractéristiques spécifiques à l'ordinateur utilisateur.

5. Procédé selon l'une quelconque des revendications 2 à 4, **caractérisé en ce que** le serveur est réalisé sous la forme d'un serveur de base de données (1), et **en ce que** le service proposé par le serveur de base de données (1) consiste en la mise à disposition de données (103, 113) prédéfinies.

6. Procédé selon l'une quelconque des revendications 2 à 5, **caractérisé en ce que** les données caractéristiques spécifiques à l'ordinateur utilisateur sont détectées par le serveur (1) lors d'une phase de détection et sont stockées dans un registre (14).

7. Procédé selon la revendication 6, **caractérisé en ce qu'**on fixe lors de la phase de détection la réponse à mettre en oeuvre à des écarts des données caractéristiques spécifiques de l'ordinateur utilisateur par rapport aux données caractéristiques stockées dans le registre (14).

8. Procédé selon l'une quelconque des revendications 2 à 7, **caractérisé en ce qu'**un programme d'application (24) de l'ordinateur utilisateur (2) établit la connexion au serveur (1).

9. Procédé selon la revendication 8, **caractérisé en ce que** le programme d'application (24) de l'ordinateur utilisateur (2) est exécuté par l'intermédiaire d'un système de protection d'utilisateur (23) installé sur l'ordinateur utilisateur (2), lequel comprend un module d'administration (230) et un moniteur de durée d'exécution (231) servant à lancer et à surveiller le programme d'application (24).

10. Procédé selon la revendication 9, **caractérisé en ce que** le module d'administration (230) détecte dans une phase d'initialisation des fichiers système, les dote d'un identifiant et les stocke dans un premier registre de l'ordinateur utilisateur (2).

11. Procédé selon la revendication 10, **caractérisé en ce qu'**on vérifie lors de la phase d'initialisation pour un programme d'application (24) les fichiers système qui sont utilisés par le programme d'application (24), **en ce que** lesdits fichiers système sont dotés d'un identifiant supplémentaire et sont stockés dans un deuxième registre de l'ordinateur utilisateur (2).

12. Procédé selon l'une quelconque des revendications 9 à 11, **caractérisé en ce que** le programme d'application (24) est lancé exclusivement par l'intermédiaire du module d'administration (230).

13. Procédé selon l'une quelconque des revendications 9 à 12, **caractérisé en ce que** le moniteur de durée d'exécution (231) surveille, lors de l'exécution du programme d'application (24), l'accès à des fichiers système par le programme d'application (24).

14. Procédé selon l'une quelconque des revendications 9 à 13, **caractérisé en ce que** le système de protection d'utilisation (23) fournit un objet de protection (25), dans lequel le programme d'application (24) est exécuté et qui isole le programme d'application (24) d'autres programmes et processus.

15. Procédé selon l'une quelconque des revendications 9 à 14, **caractérisé en ce que** le système de protection d'utilisation (23) et le serveur (1) communiquent entre eux aux fins de l'authentification réciproque.
